**Europäisches Patentamt**

**European Patent Office**

**Office européen des brevets**

(19)

(11) Veröffentlichungsnummer: **0 333 030**

**A2**

# (12) EUROPÄISCHE PATENTANMELDUNG

(21) Anmeldenummer: **89104183.2**

(22) Anmeldetag: **09.03.89**

(51) Int. Cl.⁴: **C09D 3/72 , //C08G18/42**

Patentansprüche für folgenden Vertragsstaat: ES.

(30) Priorität: **14.03.88 DE 3808405**

(43) Veröffentlichungstag der Anmeldung:
**20.09.89 Patentblatt 89/38**

(84) Benannte Vertragsstaaten:
**AT BE CH DE ES FR GB GR IT LI LU NL SE**

(71) Anmelder: **SPRAY-COLOR GMBH**
**Rurdammweg 6**
**D-5160 Düren(DE)**

(72) Erfinder: **Pezina, Günther**
**Gaddauer Strasse 99/1**
**A-2371 Hinterbrühl(AT)**
Erfinder: **Mandel, Andreas**
**Friedmanngasse 49/8**
**A-1160 Wien(AT)**

(74) Vertreter: **Paul, Dieter-Alfred, Dipl.-Ing.**
**Fichtestrasse 18**
**D-4040 Neuss 1(DE)**

(54) **Aerosollack.**

(57) Ein Aerosollack zur Herstellung eines lufttrocknenden Anstrichs unter Verwendung eines Propan-Butan-Gemisches als Treibmittel besteht aus 10 bis 40 Gew.-Teilen wasserlösliches Urethanalkydharz, 90 bis 70 Gew.-Teilen Träger und 10 bis 30 Gew.-Teilen Pigmente bzw. Farbstoffe und ggf. Fließmitteln, Anti-Absatzmitteln, Reaktionsbeschleunigern, Mattierungsmitteln und weiteren Additiven, wobei der Träger aus einem zweiphasigen Gemisch aus Treibmittel, Lösungsmittel und Wasser der folgenden Zusammensetzung besteht:

20 - 40 Gew.-Teile Propan-Butan-Flüssiggasgemisch,
9 - 14 Gew.-Teile aromatisches organisches Lösungsmittel,
8 - 25 Gew.-Teile Wasser,
10 - 45 Gew.-Teile wasserlösliches organisches Lösungsmittel,

Dieser Aerosollack zeichnet sich dadurch aus, daß als Treibmittel Propan-Butan-Flüssiggasgemische zur Anwendung kommen können, die den menschlichen Organismus nicht belasten und auch die Ozonschicht der Lufthülle nicht beeinflussen.

## Aerosollack

Die Erfindung betrifft einen Aerosollack zur Herstellung eines lufttrocknenden Anstrichs gemäß dem Oberbegriff des Patentanspruchs 1.

Die europäische Offenlegungsschrift 0 030 840 beschreibt einen Zweikomponentenlack auf Basis von Polyurethan, dessen weitere Komponente aus OH-gruppenhaltigen Prepolymeren auf der Basis von Styrol, Vinyltoluol, Methacrylsäureestern und/oder Acrylsäureestern oder Hydroxyalcylacrylaten und/oder -methacrylaten besteht. Der Lack kann anorganische und/oder organische Pigmente, Fließmittel, Anti-Absetzmittel, Reaktionsbeschleuniger, Mattierungsmittel und weitere Additive enthalten. Als Treibmittel für die Polyisocyanatkomponente des Polyurethans dient Stickstoff, während als Treibmittel für die getrennte Komponente des Prepolymers ein Propan-Butan-Gemisch vorgesehen ist. Der Lack ist zweikomponentig und völlig wasserfrei.

Aufgabe der vorliegenden Erfindung ist es, eine wasserverdünnbare Aerosollack-Rezeptur zu schaffen, die für lufttrocknende Lacke geeignet ist.

Gelöst wird diese Aufgabe durch einen Aerosollack der im kennzeichnenden Teil des Hauptanspruchs enthaltenen Zusammensetzung.

Beim erfindungsgemäßen Aerosollack handelt es sich um einen wasserverdünnbaren Aerosollack, der zur lufttrocknenden Beschichtung von diversen Oberflächen, wie Glas, Metall, Stein usw., im Aerosolsprühverfahren verwendet werden kann. Propan-Butan-Flüssiggasgemische sind bisher als Treibmittel für wasserverdünnbare Lacke nicht eingesetzt worden. Es wurde gefunden, daß wasserlösliche Urethanalkydharze, vorzugsweise gemeinsam mit den aromatischen organischen Lösungsmitteln nach Anspruch 5, oder besser noch nach Anspruch 6, wie z.B. Toluol, Xylole oder Trimethylbenzole, die Verwendung eines stabilen, zweiphasigen, wasserhaltigen Trägermaterials ermöglichen, bei dem Propan-Butan-Gemische als Treibgase angewandt werden können. Die erfindungsgemäßen Rezepturen zeichnen sich durch eine geringe Korrosionsneigung aus, so daß bei Verwendung der zweiphasigen Wasserlacke in Sprühdosen das Dosenmaterial aus Weißblech ohne Schutzlackierung bestehen kann.

Zweiphasige Trägermaterialien sind bisher in Aerosollackzusammensetzungen nicht verwendet worden. Als Treibmittel für polyurethanhaltige Lackzusammensetzungen sind bisher Dimethyläther oder Stickstoff eingesetzt worden.

Die erfindungsgemäßen Aerosollackzusammensetzungen ermöglichen es, anstelle des für den menschlichen Organismus stark belastenden Dimethyläthers nunmehr Propan-Butan-Flüssiggasgemische als Treibmittel für wasserverdünnbare Lacke einzusetzen. Diese Treibmittel beeinflussen die Ozonschicht der Lufthülle nicht. Die erfindungsgemäßen Aerosollackzusammensetzungen sind auch deshalb für den menschlichen Organismus weniger belastend, weil sie keine Glycole enthalten.

Die erfindungsgemäßen Aerosollackzusammensetzungen ermöglichen es zudem erstmals, Aerosolsprühdosen, die insbesondere im do-it-yourself-Bereich vielfach verwendet werden, auf der Basis eines wasserverdünnbaren Systems mit dem umwelt- und ozonfreundlichen Treibmittelgemisch aus Propan und Butan in einer herkömmlichen Spraydose in einer stabilen Zweiphasenmischung zu verwenden. Die so hergestellten Lackfilme stellen nach dem Trocknen eine extrem wasserfeste Beschichtung dar, die für Außenlackierungen hervorragend geeignet ist. Die sonstigen Eigenschaften, wie Glanzhaltung, Wetterstabilität, Korrosionsbeständigkeit usw. sind vergleichbaren Lösungsmittellacken durchaus ebenbürtig.

Die Erfindung wird nachfolgend an Hand von Ausführungsbeispielen näher beschrieben.

Beispiel

Die folgenden Bestandteile werden nacheinander in der nachfolgend aufgelisteten Reihenfolge einzeln in einen Vormischbehälter eingerührt:

33,3 Gew.-% Urethanalkydharz der folgenden Zusammensetzung:

19,9 Gew.-% Urethanalkydfestharz (100%)

10,0 Gew.-% aromatisches organisches Lösungsmittel

3,4 Gew.-% Methoxipropanol

0,6 Gew.-% oberflächenaktives Verlaufsmittel (Anreibhilfsmittel und Pigmentbenetzungsadditiv),

0,4 Gew.-% Triäthylamin (pH-Stabilisator)

1,0 Gew.-% Farbpigment Hostapermgelb H 4 G (Hoechst)

0,8 Gew.-% Farbpigment Novapermgelb HR 70 (Hoechst)

1,0 Gew.-% Titandioxidrutil

0,2 Gew.-% Trocknungsstoffkombination (Sikkative) der folgenden Zusammensetzung:

0,15 Gew.-% Octasoligen Cobalt

0,05 Gew.-% Octasoligen Calzium

6,7 Gew.-% Butanol

4,2 Gew.-% Methoxipropanol

Der vorgemischte Ansatz wird mittels einer geschlossenen Perlmühle auf eine Pigmentkornfeinheit von 12 bis 15 um gerieben. In den nunmehr feingemahlenen Ansatz werden die folgenden Bestandteile einzeln eingerührt:

4,8 Gew.-% Diacetonalkohol

8,5 Gew.-% Methylisobutylketon und

10,5 Gew.-% Wasser

Die Viskosität des so hergestellten fertigen Lacks soll, bestimmt durch Ausflußmessung nach DIN, folgenden Wert aufweisen:

30 bis 33 sek. DIN 5 mm/20° C. Der pH-Wert liegt zwischen 8,0 und 9,5.

Das fertige Lackmaterial wird in einer üblichen Aerosolabfüllanlage in Spraydosen gefüllt und mit 28 Gew.-% Propan-Butan-Flüssiggasgemisch der folgenden Zusammensetzung begast:

0,2 bis 0,9 % $C_2$

15 bis 40 % $C_3$ (Dichte bei 20° C:0,55 g/cm$^3$)

60 bis 85 % $C_4$

0,2 bis 0,8 % $C_5$

Nach der Begasung beträgt der Innendruck des fertigen Aerosols 2,5 bis 3,4 bar bei 20° C.

Das fertige Aerosolprodukt weist eine Lagerfähigkeit von mindestens drei Jahren auf, wobei der pH-Wert im basischen Bereich bleibt. Der Sprühkopf der Aerosoldose wird zweckmäßigerweise so gewählt, daß eine möglichst feine Vernebelung erzielt wird. Der Lack hat die folgenden Eigenschaften:

Trockenzeiten:

30 bis 60 Minuten staubtrocken,

1,5 bis 2 Stunden griffest,

72 Stunden durchgetrocknet.

Der Lack haftet gut auf Substraten, wie Holz, Glas, Stein, Metall usw. Der Glanzgrad ist je nach Rezeptur hochglänzend über 80% nach Lange bei 60° Meßwinkel) bzw. seidenglänzend oder matt.

## Ansprüche

1. Aerosollack zur Herstellung eines lufttrocknenden Anstrichs auf Basis eines filmbildenden Urethanharzes oder modifizierten Urethanharzes, enthaltend Pigmente und gegebenenfalls Fließmittel, Anti-Absetzmittel, Reaktionsbeschleuniger, Mattierungsmittel und weitere Additive, unter Verwendung eines Propan-Butan-Gemisches als Treibmittel,

gekennzeichnet durch die folgende Zusammensetzung:

10 - 40 Gew.-Teile wasserlösliches Urethanalkydharz

90 - 70 Gew.-Teile Träger, bestehend aus einem zweiphasigen Gemisch aus Treibmittel, Lösungsmittel und Wasser der folgenden Zusammensetzung:

20 - 40 Gew.-Teile Propan-ButanFlüssiggasgemisch,

9 - 14 Gew.-Teile aromatisches organisches Lösungsmittel,

8 - 25 Gew.-Teile Wasser,

10 - 45 Gew.-Teile wasserlösliches organisches Lösungsmittel und

1 - 30 Gew.-Teile Pigmente bzw. Farbstoffe.

2. Aerosollack nach Anspruch 1,

dadurch gekennzeichnet, daß das Propan-Butan-Flüssiggasgemisch aus

15 - 40 Gew.-Teile n- und iso-Propan und

60 - 85 Gew.-Teile n- und iso-Butan besteht.

3. Aerosollack nach Anspruch 1 oder 2,

dadurch gekennzeichnet, daß sich das wasserlösliche organische Lösungsmittel aus

a) einem Gemisch von mindestens 2 aliphatischen Alkoholen der Formel R-OH, worin R für eine vier bis zehn Kohlestoffatome enthaltende Alkyl-, Alkoxyalkyl- oder Mono- bzw. Diketoalkyl-Gruppe steht und

b) 9 - 50 Gew.-% Methylisobutylketon als Verlaufund Entschäumungsmittel zusammensetzt.

4. Aerosollack nach Anspruch 1 oder 2,

dadurch gekennzeichnet, daß das wasserlösliche organische Lösungsmittel aus

1 - 40 Gew.-Teilen Methoxipropanol,

5 - 30 Gew.-Teilen Butanol,

5 - 30 Gew.-Teilen Diacetonalkohol und

9 - 50 Gew.-Teilen Methylisobutylketon besteht.

5. Aerosollack nach einem der Ansprüche 1 bis 4,

dadurch gekennzeichnet, daß das aromatische organische Lösungsmittel aus mit 1 bis 6 Methylgruppen substituierten Benzolen besteht.

6. Aerosollack nach einem der Ansprüche 1 bis 4,

dadurch gekennzeichnet, daß das aromatische organische Lösungsmittel aus mit 1 bis 3 Methylgruppen substituierten Benzolen besteht.

7. Aerosollack nach einem der Ansprüche 1 bis 6,

dadurch gekennzeichnet, daß er als mindestens eine zusätzliche Komponente

bis 3 Gew.-% eines pH-Stabilisators, wie z.B. Triäthylamin,

bis 5 Gew.-% eines oberflächenaktiven Verlaufsmittels,

bis 8 Gew.-% einer Trocknungsstoffkombination (Sikkative)

und bei Erzeugung eines seidenglänzenden oder matten Lacks

2 - 12 Gew.-% eines Mattierungsmittels enthält.

8. Aerosollack nach einem der Ansprüche 1 bis 7,

dadurch gekennzeichnet, daß das Urethanalkydharz einen Isocyanatanteil von 8 bis 12 Gew.-% und einen Alkydharzanteil von 88 bis 92 Gew.-%, bezogen auf das Festharz, hat.

Patentansprüche (gemäß Artikel 167 (2) a EPÜ) :

1. Verfahren zur Herstellung eines Aerosollakkes für einen lufttrocknenden Anstrich auf Basis eines filmbildenden Urethanharzes oder modifizierten Urethanharzes, enthaltend Pigmente und gegebenenfalls Fließmittel, Anti-Absetzmittel, Reaktionsbeschleuniger, Mattierungsmittel und weitere Additive, unter Verwendung eines Propan-Butan-Gemisches als Treibmittel, dadurch gekennzeichnet, daß
10 - 40 Gew.-Teile wasserlösliches Urethanalkydharz
90 - 70 Gew.-Teile Träger, bestehend aus einem zweiphasigen Gemisch aus Treibmittel, Lösungsmittel und Wasser der folgenden Zusammensetzung:
9 - 14 Gew.-Teile aromatisches organisches Lösungsmittel,
8 - 25 Gew.-Teile Wasser,
10 - 45 Gew.-Teile wasserlösliches organisches Lösungsmittel und
1 - 30 Gew.-Teile Pigmente bzw. Farbstoffe
miteinander vermischt werden, in Spraydosen gefüllt und mit
20 - 40 Gew.-Teilen Propan-Butan-Flüssiggasgemisch begast werden.

2. Verfahren nach Anspruch 1,
dadurch gekennzeichnet, daß
10 - 40 Gew.-Teile wasserlösliches Urethanalkydharz, 90 - 70 Gew.-Teile Träger, bestehend aus einem Gemisch aus
9 - 14 Gew.-Teilen aromatisches organisches Lösungsmittel und
10 - 45 Gew.-Teilen wasserlösliches organisches Lösungsmittel
und
1 - 30 Gew.-Teilen Pigmente bzw. Farbstoffe miteinander verrieben werden, mit
10 - 45 Gew.-Teilen wasserlöslichem organischen Lösungsmittel und
8 - 25 Gew.-Teilen Wasser
vermischt werden, in Spraydosen abgefüllt und mit
20 - 40 Gew.-Teilen Propan-Butan-Flüssiggasgemisch begast werden.

3. Verfahren nach Anspruch 1 oder 2,
dadurch gekennzeichnet, daß das Propan-Butan-Flüssiggasgemisch aus
15 - 40 Gew.-Teile n- und iso-Propan und
60 - 85 Gew.-Teile n- und iso-Butan besteht.

4. Verfahren nach einem der Ansprüche 1 bis 3,
dadurch gekennzeichnet, daß sich das wasserlösliche organische Lösungsmittel aus
a) einem Gemisch von mindestens 2 aliphatischen Alkoholen der Formel R-OH, worin R für eine vier bis zehn Kohlestoffatome enthaltende Alkyl-, Alkoxyalkyl- oder Mono- bzw. Diketoalkyl-Gruppe steht und
b) 9 - 50 Gew.-% Methylisobutylketon als Verlauf- und Entschäumungsmittel
zusammensetzt.

5. Verfahren nach Anspruch 1 oder 3,
dadurch gekennzeichnet, daß das wasserlösliche organische Lösungsmittel aus
1 - 40 Gew.-Teilen Methoxipropanol,
5 - 30 Gew.-Teilen Butanol,
5 - 30 Gew.-Teilen Diacetonalkohol und
9 - 50 Gew.-Teilen Methylisobutylketon
besteht.

6 Verfahren nach einem der Ansprüche 1 bis 5,
dadurch gekennzeichnet, daß das aromatische organische Lösungsmittel aus mit 1 bis 6 Methylgruppen substituierten Benzolen besteht.

7. Verfahren nach einem der Ansprüche 1 bis 5,
dadurch gekennzeichnet, daß das aromatische organische Lösungsmittel aus mit 1 bis 3 Methylgruppen substituierten Benzolen besteht.

8. Verfahren nach einem der Ansprüche 1 bis 7,
dadurch gekennzeichnet, daß mindestens eine zusätzliche Komponente
bis 3 Gew.-% eines pH-Stabilisators, wie z.B. Triäthylamin,
bis 5 Gew.-% eines oberflächenaktiven Verlaufsmittels,
bis 8 Gew.-% einer Trocknungsstoffkombination (Sikkative)
und bei Erzeugung eines seidenglänzenden oder matten Lacks
2 - 12 Gew.-% eines Mattierungsmittels
zugemischt wird.

9. Verfahren nach einem der Ansprüche 1 bis 8,
dadurch gekennzeichnet, daß das Urethanalkydharz einen Isocyanatanteil von 8 bis 12 Gew.-% und einen Alkydharzanteil von 88 bis 92 Gew.-%, bezogen auf das Festharz, hat.